# EUROPÄISCHE PATENTSCHRIFT

(11) **EP 1 611 975 B1**
(45) Veröffentlichungstag und Bekanntmachung des Hinweises auf die Patenterteilung: **01.09.2010**
(21) Anmeldenummer: 05013663.9
(22) Anmeldetag: 24.06.2005
(51) Int. Cl.: B21K 1/18, B23P 15/10

(54) **Verfahren zur Herstellung eines Kühlkanalkolbens für eine Brennkraftmaschine**
Method of manufacturing a piston with a cooling channel for an internal combustion engine
Procédé de fabrication d'un piston à canal de refroidissement pour un moteur à combustion interne

(30) Priorität: 30.06.2004 DE 102004031513
(43) Veröffentlichungstag der Anmeldung: 04.01.2006
(73) Patentinhaber: KS Kolbenschmidt GmbH, 74172 Neckarsulm (DE)
(72) Erfinder: Huang, Yuejun, Dr.-Ing., Place IN 46804 (US)
(74) Vertreter: Greif, Thomas

(56) Entgegenhaltungen:
- CH-A- 230 566
- DE-B- 1 103 698
- DE-B- 1 210 302
- DE-C1- 3 713 191

## Beschreibung

### Verfahren zur Herstellung eines Kühlkanalkolbens für eine Brennkraftmaschine

Die Erfindung betrifft ein Verfahren zur Herstellung eines Kühlkanalkolbens für eine BrennKraftmaschine gemäß den Merkmalen des Oberbegriffes des Patentanspruchs 1.

Grundsätzlich ist es bekannt, Rohlinge für Kolben, die nach ihrer Endbearbeitung unter anderem einen Kühlkanal aufweisen, im Guß- oder Schmiedeverfahren herzustellen. Hierbei sind auch Kombinationen der beiden genannten Verfahren denkbar. Das Schmiedeverfahren bietet sich an, da ein im Schmiedeverfahren hergestellter Kolben bessere Festigkeitseigenschaften aufweist gegenüber einem Kolben, der im Gießverfahren hergestellt wurde. Bei Kolbenrohlingen, die im Schmiedeverfahren hergestellt werden, bedarf es eines aufwendigen Prozesses, um einen im Ringfeldbereich liegenden Kühlkanal in diesen Kolbenrohling einzubringen. Gegenüber gegossenen Kolbenrohlingen kann bei im Schmiedeverfahren hergestellten Rohlingen nicht mit verlorenen Kernen gearbeitet werden. Deshalb ist es immer wieder problematisch, den Kühlkanal durch geeignete Schritte einzubringen. Bekannt hierfür ist, dass radial umlaufend eine Ausnehmung durch spanabhebende Bearbeitung eingebracht und durch geeignete Mittel verschlossen wird. Dabei ist aber auf die Maßhaltigkeit der Ausnehmung und der Mittel, die diese Ausnehmung verschließen sollen, zu achten, wodurch ein kostenintensiver Arbeitsschritt zusätzlich erforderlich wird. Durch die erforderliche Maßhaltigkeit sind auch die beteiligten Elemente nur entsprechend aufwendig zu fertigen.

Aus der DE 35 02 248 C1 ist ein gattungsbildendes Verfahren zur Herstellung eines einteiligen Kolbens für einen Verbrennungsmotor durch Schmieden bekannt. Hierbei wird ein Kolbenrohling mit Vorformlingkragen hergestellt, wobei dieser Kragen im oberen Bereich des Kolbenbodens durch Umformen abgewinkelt wird, wodurch eine sogenannte Kolbenkronenschulter entsteht, die zusammen mit einem Bereich eines Kolbenkronenvorformlings einen Wärmedrosselringspalt erzeugt. Aufgrund der Umformung des Kragens im oberen Bereich des Kolbenbodens entstehen zunächst abgerundete Kanten, die eine Überarbeitung der seitlichen und oberen Flächen des Kolbenrohlings bedingen. Ein wesentlicher Nachteil ist zusätzlich durch die Umformung gegeben, wodurch der Kolbenboden in seiner Festigkeit geschwächt wird, so dass ein derart hergestellter Kolben den Anforderungen an modeme Brennkraftmaschinen in Bezug auf die gesteigerten Zünddrücke und Verbrennungatermperaturen zur Einhaltung vorgegebener Abgasvorschriften nicht mehr genügt.

Aus der DE 103 09 016 ist ein Verfahren zur Herstellung eines Kühlkanalkolbens bekannt, bei dem bei einem Kolbenrohling, der in einem Schmiedeverfahren hergestellt wird, insbesondere etwa im Bereich eines Feuersteges zumindest ein umlaufender Bund geformt wird, wobei hinter dem zumindest einen Bund eine Ausnehmung eingebracht und anschließend der zumindest eine Bund mittels einer Umformung derart umgeformt wird, dass die Ausnehmung zur Bildung des Kühlkanales von dem zumindest einen Bund verschlossen wird. Damit steht eine konstruktive Möglichkeit und ein Herstellungsverfahren für die Herstellung eines Kühlkanales zur Verfügung.

Das gattungsbildende Verfahren zur Herstellung eines Kühlkanalkolbens ist aus der DE 1 103 698 bekannt.

Der Erfindung liegt die Aufgabe zugrunde, neben den schon bekannten Verfahren zur Herstellung von Kühlkanalkolben ein weiteres Verfahren anzugeben, das auf alle Bauarten von Kolben anwendbar ist.

Diese Aufgabe ist durch die Merkmale des Patentanspruchs 1 gelöst.

Erfindungsgemäß ist vorgesehen, dass vor der Verformung der Kragen in einem Winkel von etwa 90° in Bezug auf die Kolbenhubachse absteht und dieser äußere radial umlaufende Teil des Kragens um etwa 90° abgewinkelt wird und damit im Anlagebereich an diesem zur Anlage kommt. Der Anlagebereich hat den Vorteil, dass bei der Umformung der Kragen in eine definierte Position gebracht werden kann, nämlich dass der Kragen nach der Umformung sehr nah oder vollständig zur Anlage an den Anlagebereich, der von dem Kolbenrohling gebildet wird, kommt. Dieser Anlagebereich kann schon mit Herstellung des Kolbenrohlinge im Gießverfahren oder Schmiedeverfahren hergestellt werden. Denkbar ist auch, dass der Anlagebereich in einer ersten Vorform im Gleß- oder Schmiedeverfahren mit dem Kolbenrohling hergestellt und anschließen bearbeitet wird, wobei sich In besonders vorteilhafter Wiese eine spanabhebende Bearbeitung anbietet. Je nach Genauigkeit der Herstellung des Kolbenrohlings kann auch eine weitere Bearbeitung des Anlagebeneiches nach dessen Herstellung mit dem Kolbenrohling entfallen. Daneben ist es ebenso denkbar, dass der Kolbenrohling zunächst ohne Anlagebereich hergestellt und dieser anschließend aus dem Kolbenrohling herausgearbeitet wird.

Nach dem Umformen des radial umlaufenden Kragens und dessen Anlage an den Anlagebereich steht (vorzugsweise etwa im Bereich hinter einem späteren Ringfeld) ein geschlossener Kühlkanal zur Verfügung, wobei der Anlagebereich des Kolbenrohlings und des Kragens unlösbar miteinander zusammengefügt werden kann. Hier bieten sich alle in Betracht kommenden Schweißverfahren oder sonstige Fügeverfahren, die eine unlösbare Verbindung zur Folge haben, an.

Nach der Umformung des Kragens steht - wie schon beschrieben - ein Kolbenrohling mit einem radial umlaufenden Kühlkanal zur Verfügung, wobei aufgrund der Geometrien des Kolbenrohlings sich der Kühlkanal etwa radial umlaufend hinter dem später anzuordnenden Ringfeld des Kolbens befindet. Es erfolgt abschließend noch eine Endbearbeitung des Kolbens, die insbesondere die Schritte enthält. dass zumindest eine Öffnung in Richtung des Kühlkanales eingebracht wird, wobei ein Austausch von einem Kühlmedium, insbesondere Motoröl, über diese zumindest eine Öffnung erfolgt. Diese Öffnung kann durch Bohren. Fräsen oder sonstige Art und Weise hergestellt werden. Neben einer Öffnung sind auch mehrere Öffnungen denkbar, so zumindest eine oder mehrere Öffnungen für den Zulauf von Kühlmedium in den Kühlkanal und zumindest eine oder mehrere Ablauföffnungen für den Ablauf des Kühlmediums aus dem Kühlkanal heraus. Diese Öffnung bzw. die mehreren Öffnungen sind vertikal, horizontal oder schräg zu einer Achse (insbesondere der Kolbenbewegungsachse) ausgerichtet. Ebenso gehört zur Endbearbeitung, dass der Kolbenrohling auf Sollmaß des späteren fertigen Kühlkanalkolbens gebracht wird, wozu die äußere Oberfläche des Kolbenrohlings abgedreht wird. Dabei können auch die Ringnuten des Ringfeldes eingebracht werden, die sich auch im umgeformten Bereich des Kragens befinden können. Je nach Bauart des Kolbens, insbesondere auch im Hinblick darauf, ob es sich um einen einteiligen oder mehrteiligen Kolben, insbesondere einen Pendelschaftkolben, handelt, sind weitere Bearbeitungsschritte nötig, wie zum Beispiel die Einbringung einer Brennraummulde in den Kolbenboden des Bodens.

Ein Ausführungsbeispiel des erfindungsgemäßen Verfahrens zur Herstellung eines Kühlkanalkolbens, auf das die vorliegende Erfindung jedoch nicht beschränkt ist, ist im folgenden beschrieben und anhand der Figuren erläutert.

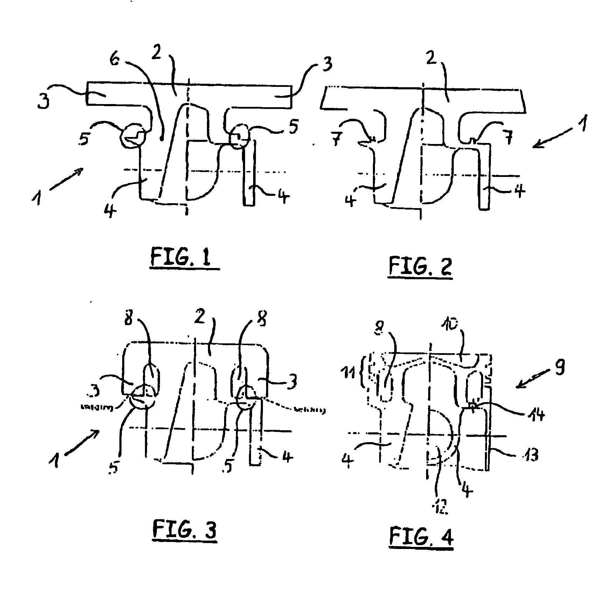

Die Figuren 1 bis 4 zeigen die einzelnen Schritte des erfindungsgemäßen Verfahrens zur Herstellung des Kühlkanalkoibens.

Mit der Bezugsziffer 1 ist ein Kolbenrohling dargestellt, der zum Beispiel in einem Gieß- oder Schmiedeverfahren hergestellt wird. Hierbei kann es sich auch um andere Herstellungsverfahren für einen Kolbenrohling handeln, wie zum Beispiel das Fliess-Press-Verfahren. Das Verfahren, mit dem der Kolbenrohling 1 hergestellt wird, richtet sich im Regelfall nach der Gestaltung des Kolbens und der an dem Kolben gestellten Festigkeitsanforderungen. Der in Figur 1 dargestellte Kolbenrohling 1 weist einen Kolbenboden 2 (Oberteil) auf, wobei von dem Kolbenboden 2 radial umlaufend ein Kragen 3 absteht. An dem Kolbenboden 2 befinden sich nach unten Kolbennaben 4 mit Kolbenschäften und Bolzenbohrungen und ggf. weiteren Elementen, die zusammen ein Kolbenunterteil bilden.

In einem Übergangsbereich zwischen dem Kolbenboden 2 und dem Kalbenunterteil, vorzugsweise an der oberen umlaufenden Kante der Kolbennaben 4, ist ein Anlagebereich 5 vorhanden, der sich, wie schon geschildert, in einem Übergangsbereich 6 zwischen dem Kolbenboden 2 und dem Kolbenunterteil befindet. Dieser Übergangsbereich 6 ist bei dem Kolbenrohling 1 gemäß Figur 1 in etwa als umlaufender Steg ausgebildet, kann bei anderen Kolbenbauformen aber auch andere Geometrien aufweisen. Der Anlagebereich 5 dient zur Aufnahme der äußeren radial umlaufenden Kante des Kragens 3, nachdem er umgeformt worden ist. Um die Endlage des Kragens 3 nach seiner Umformung besser definieren zu können, sind gemäß Figur 2 in dem Anlagebereich 5 ein radial umlaufender Steg 7 oder Teilbereiche eines Steges vorhanden, wobei der Steg 7 zum Beispiel durch spanabhebende Bearbeitung hergestellt werden kann. Diese Ausführungsform ist in Figur 2 gezeigt, wobei auch im Anlagebereich 5 ein einfacher Absatz vorhanden sein kann, an den die äußere radial umlaufende Kante des Kragens 3 nach dessen Umformung zur Anlage kommen kann, wie dies beispielsweise in Figur 1 darstellt ist. Von besonderem Vorteil ist, dass der Anlagebereich 5 derart geformt ist oder bearbeitet wird, dass seine Form der äußeren umlaufenden Kante des Kragens 3 entspricht. Dadurch ist es nicht unbedingt erforderlich, den Kragen 3 mit dem Anlagebereich 5 zu verbinden. Hier kann gegebenenfalls zur dichtenden Herstellung des Kühlkanales ein Formschluß zwischen Kragen 3 und Anlagebereich 5 ausreichend sein. So kann zum Beispiel die Stirnseite des Kragens 3 mit einer Nut versehen sein, die beim Umformen des Kragens 3 über eine entsprechend geformte Wulst im Anlagebereich 5 gedrückt wird (oder umgekehrt). Insbesondere zur Steigerung der Festigkeit und auch zur Verbesserung der Dichtheit wird jedoch der Kragen 3 im Anlagebereich 5 mit dem Kolbenrohling 1 unlösbar verbunden, insbesondere durch ein Löt-, Schweiß-, Klebe- oder ein sonstiges Verfahren.

Figur 3 zeigt den Kragen 3 nach seiner Umformung, wobei erkennbar ist, dass der äußere radial umlaufende Teil des Kragens 3 um etwa 90° abgewinkelt und damit im Anlagebereich 5 an diesen zur Anlage gekommen ist. Durch diese Umformung und die entsprechende Formgebung des Kolbenbodens 2 mit dem dort vorhandenen abstehenden Kragen 3 wird ein radial umlaufender Kühlkanal 8 gebildet, wobei von besonderer Bedeutung ist, dass die Innenwandung des Übergangsbereiches 6 gerundet in den Kragen 3 übergeht, um die spätere Querschnittsform des Kühlkanales 8 sicherzustellen. Ebenso ist in Figur 3 erkennbar, dass die Materialstärke des Kragens 3 derart gewählt ist, daraus resultiert ein größerer Durchmesser des Kolbenrohlings 1 des umgeformten Kragens 3 gegenüber dem Außendurchmesser im Bereich der Kolbennaben 4 (Kolbenschäfte). Dies macht es erforderlich, die äußere Oberfläche des derart hergestellten Kolbenrohlings zu überarbeiten, insbesondere mittels eines spanabhebenden Verfahrens. Die größere Dicke des Kragens 3 hat den Vorteil. dass die Festigkeit für die Umformung des Kragens 3 ausreichend hoch ist, wobei die ursprüngliche Dicke des Kragens 3 für die spätere Funktion des Kolbens überdimensioniert ist, so dass dieser umgeformte Bereich des Kragens 3 zum Beispiel abgedreht werden kann. In bevorzugter Weise vor dieser spanabhebenden Bearbeitung der äußeren Oberfläche des Kolbenrohlings 3 erfolgt das unlösbare Zusammenfügen der äußeren umlaufenden Kante des Kragens 3 mit dem Anlagebereich 5. Dieser Fügevorgang kann radial umlaufend zumindest teilweise (beispielsweise punktförmig oder in mehreren Abschnitten) oder radial vollständig umlaufend erfolgen.

Nachdem der Kalbenrohling 1 gemäß Figur 3 hergestellt worden ist, wird er noch einer Endbearbeitung unterzogen, so dass nach dieser Endbearbeitung der fertige Kühlkanalkolben zur Verfügung steht, der in Figur 4 mit der Bezugsziffer 9 versehen ist. Bei dieser in dem Ausführungsbeispiel gezeigten Bauform des Kühlkanalkolbens 9 wird noch im Kolbenboden 2 eine Brennraummulde 10 eingebracht. Im Bereich des Kolbenbodens 2 und damit auch zumindest teilweise im Bereich des umgeformten Kragens 3 werden Ringnuten eines Ringfeldes 11 eingebracht. Bei diesem fertigen Kühlkanalkolben 9 sind eine Bolzenbohrung mit der Bezugsziffer 12 und ein Kolbenschaft mit der Bezugsziffer 13 versehen. Ebenso ist für den Austausch von Kühlmedium in den Kühlkanal 8 hinein und wieder hinaus zumindest eine Öffnung 14 vorgesehen, die parallel zu der Kolbenhubachse 15 in Richtung des Kühlkanales 8 eingebracht worden ist.

Abschließend sei noch darauf hingewiesen, dass in den Figuren 1 bis 4 der Kolbenrohling 1 bzw. der Kühlkanalkolben 9 entlang der Kolbenhubachse 15 in zwei verschiedenen Ansichten (einmal links und einmal rechts von der Kolbenhubachse 15) gezeigt ist.

### Bezugszeichenliste

- 1.: Kolbenrohling
- 2.: Kolbenboden
- 3.: Kragen
- 4.: Kolbennaben
- 5.: Anlagebereich
- 6.: Übergangsbereich
- 7.: Steg
- 8.: Kühlkanal
- 9.: Kühlkanalkolben
- 10.: Brennraummulde
- 11.: Ringfeld
- 12.: Bolzenbohrung
- 13.: Kolbenschaft
- 14.: Bohrung
- 15.: Kolbenhubachse

## Patentansprüche

1. Verfahren zur Herstellung eines Kühlkanalkolbens (9) für eine Brennkraftmaschine, der in seinem Kolbenboden (2) einen Kühlkanal (8) aufweist, wobei sich dem Kolbenboden (2) ein Kolbenunterteil mit Kolbennaben (4), Bolzenbohrungen (12) und Kolbenschäften (13) anschließt, wobei zunächst ein Kolbenrohling (1) mit einem im Bereich des Kolbenbodens (2) radial abstehenden und umlaufenden Kragen (3) hergestellt wird, wobei der Kragen (3) anschließend umgeformt wird, wobei in einem Übergangsbereich (6) zwischen dem Kolbenboden (2) und dem Kolbenunterteil ein Anlagebereich (5) für den Kragen (3) geformt wird und der Kragen (3) derart umgeformt wird, bis dessen äußere radial umlaufende Kante sehr nah oder vollständig zur Anlage an den Anlagebereich (5) kommt, um einen geschlossenen Kühlkanal (8) zu bilden, **dadurch gekennzeichnet, dass** vor der Verformung der Kragen (3) In einem Winkel von etwa 90° in Bezug auf die Kolbenhubachse absteht und dieser äußere radial umlaufende Teil des Kragens (3) um etwa 90° abgewinkelt wird und damit im Anlagebereich (5) an diesem zur Anlage kommt.

2. Verfahren nach Anspruch 1, **dadurch gekennzeichnet, dass** der Kolbenrohling (1) in einem Schmiedeverfahren geformt und der Anlagebereich (5) durch spanabhebende Bearbeitung hergestellt wird.

3. Verfahren nach Anspruch 1 oder 2, **dadurch gekennzeichnet, dass** der Anlagebereich (5) derart geformt ist oder bearbeitet wird, dass seine Form der äußeren umlaufenden Kante des Kragens (3) entspricht.

4. Verfahren nach einem der vorhergehenden Anspruche, **dadurch gekennzeichnet, dass** der Anlagebereich (5) einen zumindest teilweise, insbesondere vollständig radial umlaufenden Steg (7) aufweist, der für die Umformung des Kragens (3) dessen Endlage festiegt.

5. Verfahren nach einem der vorhergehenden Anspruche, **dadurch gekennzeichnet, dass** der Kragen (3) in dem Anlagebereich (5) an diesem unlösbar angefügt wird.

6. Verfahren nach einem der vorhergehenden Ansprüche, **dadurch gekennzeichnet, dass** der Kolbenrohling (1) nach der Umformung des Kragens (3) endbearbeitet wird.

## Claims

1. Method for producing a cooling-duct piston (9) for an internal combustion engine, which piston has a cooling duct (8) in its piston head (2), the piston head (2) having adjoining it a piston lower part with piston hubs (4), bolt bores (12) and piston shanks (13), a piston blank (1), with a peripheral collar (3) projecting radially in the region of the piston head (2), first being produced, the collar (3) subsequently being reformed, a bearing region (5) for the collar (3) being formed in a transitional region (6) between the piston head (2) and the piston lower part, and the collar (3) being reformed in such a way that its outer radially peripheral edge comes very near to or completely to bear against the bearing region (5), in order to form a closed cooling duct (8), **characterized in that**, before deformation, the collar (3) projects at an angle of about 90° with respect to the piston-stroke axis, and this outer radially peripheral part of the collar (3) is angled at about 90° and consequently, in the bearing region (5), comes to bear against the latter.

2. Method according to Claim 1, **characterized in that** the piston blank (1) is formed by a forging method and the bearing region (5) is produced by cutting machining.

3. Method according to Claim 1 or 2, **characterized in that** the bearing region (5) is formed or machined in such a way that its shape corresponds to the outer peripheral edge of the collar (3).

4. Method according to one of the preceding claims, **characterized in that** the bearing region (5) has an at least partially, in particular completely, radially peripheral web (7) which defines the end position of the collar (3) for the reforming of the latter.

5. Method according to one of the preceding claims, **characterized in that** the collar (3), in the bearing region (5), is attached unreleasably to the latter.

6. Method according to one of the preceding claims, **characterized in that** the piston blank (1) is finally machined after the reforming of the collar (3).

## Revendications

1. Procédé de fabrication d'un piston à canal de refroidissement (9) pour un moteur à combustion interne, qui présente, dans son fond de piston (2), un canal de refroidissement (8), le fond de piston (2) se raccordant à une partie inférieure de piston avec un moyeu de piston (4), des alésages de boulon (12) et des tiges de piston (13), une pièce brute de piston (1) avec un rebord (3) périphérique et saillant radialement dans la région du fond de piston (2) étant d'abord fabriquée, le rebord (3) étant ensuite façonné, et dans une région de transition (6) entre le fond de piston (2) et la partie inférieure de piston, une région d'appui (5) pour le rebord (3) étant formée, et le rebord (3) étant façonné de telle sorte que son arête périphérique radialement extérieure vienne très près ou complètement en appui contre la région d'appui (5), afin de former un canal de refroidissement (8) fermé, **caractérisé en ce qu'**avant son façonnage, le rebord (3) fait saillie suivant un angle d'environ 90° par rapport à l'axe de levée du piston et cette partie périphérique radialement extérieure du rebord (3) est coudée d'environ 90° et vient donc en appui dans la région d'appui (5) contre celle-ci.

2. Procédé selon la revendication 1, **caractérisé en ce que** la pièce brute de piston (1) est façonnée dans un procédé de forgeage et la région d'appui (5) est fabriquée par usage par enlèvement de copeaux.

3. Procédé selon la revendication 1 ou 2, **caractérisé en ce que** la région d'appui (5) est façonnée ou usinée de telle sorte que sa forme corresponde à l'arête périphérique extérieure du rebord (3).

4. Procédé selon l'une quelconque des revendications précédentes, **caractérisé en ce que** la région d'appui (5) présente une nervure (7) au moins en partie, et en particulier complètement, périphérique radialement, qui fixe la position de fin de course pour le façonnage du rebord (3).

5. Procédé selon l'une quelconque des revendications précédentes, **caractérisé en ce que** le rebord (3) est assemblé de manière permanente dans la région d'appui (5) à cette dernière.

6. Procédé selon l'une quelconque des revendications précédentes, **caractérisé en ce que** la pièce brute de piston (1) est finie par usinage après le façonnage du rebord (3).
